# EUROPÄISCHE PATENTANMELDUNG

(11) **EP 1 635 145 A2**
(43) Veröffentlichungstag der Anmeldung: **15.03.2006**
(21) Anmeldenummer: 05107618.0
(22) Anmeldetag: 19.08.2005
(51) Int. Cl.: G01C 21/36

(54) **Modul und Verfahren zur adaptiven Mensch-Maschine-Kommunikation in einem Kraftfahrzeug**

(30) Priorität: 10.09.2004 DE 102004043853
(71) Anmelder: SIEMENS AKTIENGESELLSCHAFT, 80333 München (DE)
(72) Erfinder: Ruehl, Hans-Wilhelm, 35606 Solms (DE)

(57) **Zusammenfassung**

Die Erfindung betrifft ein Modul (10) und ein Verfahren zur Unterstützung eines Fahrzeugführers bei der Bedienung eines zu Informations- oder Unterhaltungszwecken dienenden Elektroniksystems (6, 7, 8) in einem Kraftfahrzeug, mit einer Recheneinheit (1), einer mit der Recheneinheit (1) verbundenen Datenschnittstelle (13, 14) zu einer Ausgabeeinheit (3, 4) und einer mit der Recheneinheit (1) verbundenen Datenschnittstelle (12, 16, 17, 18, 19), über die die Recheneinheit (1) mindestens eine Information einliest, aus der die Recheneinheit (1) die aktuelle Belastung (28) des Fahrzeugführers ableitet. Erfindungsgemäß ist die Recheneinheit (1) mit einer ersten Speichereinheit (5) verbunden, in der Bedieninformationen (33) über in der Vergangenheit durch den Fahrzeugführer erfolgte Bedienvorgänge des Elektroniksystems (6, 7, 8) abgelegt sind. Angepasst an die aktuelle Belastung (28) und an die Bedieninformationen (33) ermittelt die Recheneinheit (1) mindestens einen aktuell vom Fahrzeugführer durchführbaren Bedienvorgang des Elektroniksystems (6, 7, 8) und gibt zu dem mindestens einen durchführbaren Bedienvorgang eine Empfehlung auf der Ausgabeeinheit (3, 4) aus.

## Beschreibung

Die Erfindung betrifft ein Modul und ein Verfahren zur Unterstützung eines Fahrzeugführers bei der Bedienung eines zu Informations- oder Unterhaltungszwecken dienenden Elektroniksystems in einem Kraftfahrzeug, mit einer Recheneinheit, einer mit der Recheneinheit verbundenen Datenschnittstelle zu einer Ausgabeeinheit und einer mit der Recheneinheit verbundenen Datenschnittstelle, über die die Recheneinheit mindestens eine Information einliest, aus der die Recheneinheit die aktuelle Belastung des Fahrzeugführers ableitet.

Aus der DE 102 26 425 A1 sind ein Verfahren und eine Einrichtung zur Unterstützung des Fahrers eines Fahrzeugs bei der Entgegennahme von Telefonanrufen bekannt, bei denen bei Eintreffen eines Anrufs in Abhängigkeit der aktuellen Fahrerbeanspruchung und/oder der Fahrsituation geprüft wird, ob der Fahrer zur Entgegennahme in der Lage ist, und dementsprechend wird der Anrufende entweder informiert oder zum Anrufbeantworter durchgeschaltet. Eingehende Anrufe erfordern vom Fahrer eine Bedienung des Funktelefons zu einem Zeitpunkt, den er selbst nicht beeinflussen kann. Die DE 102 26 525 A1 liefert deshalb einen Lösungsansatz, wie ein eingehender Anruf bei ungünstigem Zeitpunkt vom Fahrer ferngehalten kann

Im Gegensatz dazu betrifft die vorliegende Anmeldung eine vom Fahrer initiierte bzw. gewünschte Bedienung eines elektronischen Gerätes im Kraftfahrzeug. In heutigen Kraftfahrzeugen finden bereits verschiedenartige Informations- und Unterhaltungssysteme Verwendung, wie Funktelefone, Navigations- und Verkehrsinformationssysteme oder Musik- und Videogeräte. Diese Systeme werden vom Fahrer über ein oder mehrere manuelle Eingabeeinheiten sowie per Spracheingabe bedient. Da eine solche Bedienung einen Teil der Aufmerksamkeit des Fahrers erfordert, sollte er stets Fahrsituationen abwarten, in denen seine Aufmerksamkeit nicht voll für die Fahraufgabe benötigt wird, also beispielsweise eine Geradeausfahrt mit mittlerer Geschwindigkeit und bei mäßig dichtem Verkehr.

Häufig treten jedoch plötzliche Änderungen der Verkehrssituation auf, durch die der Fahrer gezwungen wird, eine begonnene Bedienung oder Benutzung eines Informations- bzw. Unterhaltungssystems zu unterbrechen. Im Fall der Bedienung eines Systems über ein Menü, bei dem erst mehrere logische Ebenen durchlaufen und Menü-Unterpunkte ausgewählt werden müssen, bevor man im gewünschten Bedienmodus ankommt, kann eine längere Unterbrechung zu einem automatischen Verlassen des Menüs führen, so dass der Fahrer zum nächsten günstigen Zeitpunkt denselben Vorgang noch einmal ausführen muss. Bei einer Sprachbedienung wird der Spracheingabekanal häufig nach einer längeren Sprechpause abgeschaltet, so dass die Spracheingabe wieder neu gestartet werden muss, beispielsweise durch Betätigung einer so genannten Push-To-Talk Taste (PTT). Bei Eingabevorgängen, die über ein Display visualisiert werden, kann eine Unterbrechung dazu führen, dass ein ausgewähltes Fenster in der Zwischenzeit automatisch von einem anderen Fenster in den Hintergrund verdrängt wurde, da beispielsweise das Navigationssystem eine aktuelle Fahranweisung ausgeben will.

Wird in solchen Situationen der Fahrer für eine längere Zeitdauer abgelenkt, so vergisst er unter Umständen die begonnene Aktivität ganz oder wird bei mehrfach aufeinander folgenden Unterbrechungen durch die ständige Wiederholung derselben Bedienvorgänge frustriert.

Aufgabe der vorliegenden Erfindung ist es deshalb, ein Modul und ein Verfahren der eingangs genannten Art anzugeben, mit denen der Fahrer bei seiner Bedienaufgabe von Informations- und Unterhaltungssystemen besser unterstützt werden kann.

Diese Aufgabe wird mit einem Modul nach Anspruch 1 und einem Verfahren nach Anspruch 11 gelöst.

Erfindungsgemäß ist die Recheneinheit mit einer ersten Speichereinheit verbunden, in der Bedieninformationen über in der Vergangenheit durch den Fahrzeugführer erfolgte Bedienvorgänge des Elektroniksystems abgelegt sind. Unter Bedienvorgang wird dabei eine Abfolge von Bedienschritten verstanden, die in ihrem Ergebnis zu einer Änderung des aktuellen Zustandes des Elektroniksystems führt. Die Bedieninformationen beinhalten dementsprechend die Art des Bedienvorgangs, d. h. die vom Fahrer gewünschte oder beabsichtigte Änderung des Zustandes des Elektroniksystems, die vom Fahrzeugführer erfolgten Bedienschritte bzw. die für die Bedienschritte erforderlichen Betätigungen von Eingabegeräten, die Reihenfolge der Bedienschritte, Datum und/oder Uhrzeit sowie Informationen über Erfolg oder Misserfolg des Bedienvorgangs und die Ursache für einen eventuellen Misserfolg. Erfindungsgemäß ermittelt die Recheneinheit angepasst an die aktuelle Belastung des Fahrzeugführers und an die abgespeicherten Bedieninformationen mindestens einen aktuell vom Fahrzeugführer durchführbaren Bedienvorgang des Elektroniksystems und gibt zu diesem mindestens einen durchführbaren Bedienvorgang eine Empfehlung auf der Ausgabeeinheit aus.

Entsprechend dieser Empfehlung kann der Fahrer selbst entscheiden, ob er einen der möglichen Bedienvorgänge starten will oder nicht. Da das erfindungsgemäße Modul nur die Bedienvorgänge vorschlägt, die den Fahrer in der aktuellen Fahrsituation nicht zu stark ablenken, dient das Modul der Erhöhung der Fahrsicherheit. Zum einen wird der Fahrer nur zu den Bedienvorgängen animiert, die von ihm auch bewältigbar sind, und zum anderen werden mehrfache Fehlversuche ein und desselben Bedienvorgangs mit ständiger Unterbrechung aufgrund des Verkehrsgeschehens vermieden, da das Modul nach dem ersten Versuch den Bedienvorgang erst dann wieder empfiehlt, wenn eine erfolgreiche Beendigung des Vorgangs auch wahrscheinlich ist.

Beispielsweise können in der ersten Speichereinheit Bedieninformationen eines Funktelefons gespeichert werden, wobei insbesondere Telefonanrufe von Interesse sind, die zwar regulär durch den Fahrzeugführer beendet wurden, bei denen jedoch kein Gespräch stattgefunden hat, wie beispielsweise bei einer besetzten Leitung oder bei einer fehlenden oder stark gestörten Netzverbindung. Als Bedieninformationen werden hierbei die gewählten Rufnummern und die Ursache für das nicht durchgeführte Gespräch im Speicher abgelegt. Erkennt die Recheneinheit nun anhand der ermittelten Belastung des Fahrzeugführers, dass der Fahrer seine Aufmerksamkeit nicht mehr voll für die Fahraufgabe benötigt, so sucht sie in der ersten Speichereinheit nach derartigen gescheiterten Telefonanrufen und macht dem Fahrer per Text auf einem Bildschirm oder per akustischer Ansage den Vorschlag, eine erneute Telefonverbindung zu dem entsprechenden Gesprächsteilnehmer aufzubauen. Stimmt der Fahrer zu, so übernimmt die Recheneinheit das Wählen der Rufnummer.

In einer bevorzugten Ausgestaltung der Erfindung ist der mindestens eine durchführbare und von der Recheneinheit empfohlene Bedienvorgang ein in der Vergangenheit unterbrochener Bedienvorgang. Bei Auswahl dieses Bedienvorgangs durch den Fahrzeugführer stellt die Recheneinheit den Zustand des Elektroniksystems wieder her, der vor der Unterbrechung bestanden hat. Da der Fahrer nicht mehr selbst daran denken muss, einmal begonnene Aktivitäten später fortzusetzen, kann er seine Konzentration voll auf den Verkehr richten. Er muss sich auch nicht mehr merken, an welcher Stelle er unterbrochen wurde und was er eigentlich genau machen wollte. Die gedankliche Ablenkung wird damit stark reduziert, was der Fahrsicherheit im allgemeinen, also nicht nur während der Momente der Bedienung des Elektroniksystems, zugute kommt.

Beispiele für unterbrochene Bedienvorgänge sind die Auswahl eines Zielortes eines Navigationssystems oder die Eingabe einer zu wählenden Rufnummer. Nachdem der Fahrer bereits erste Buchstaben bzw. Ziffern eingegeben hat, wird er durch den Verkehr plötzlich so stark gefordert, dass er die Eingabe unterbrechen muss. Nach einer längeren Pause verlässt das entsprechende Elektroniksystem automatisch den Eingabemodus. Bei einer von der Recheneinheit festgestellten Reduktion der Belastung des Fahrzeugführers bietet die Recheneinheit nun per grafischer und/oder akustischer Ausgabe an, den Eingabevorgang fortzusetzen. Wird dies vom Fahrer bestätigt, so sorgt die Recheneinheit durch entsprechende Befehle an das Elektroniksystem dafür, dass der Eingabemodus wieder an der Stelle aufgerufen wird, an der er verlassen wurde. Die bereits eingegebenen Buchstaben oder Ziffern können neben der grafischen Anzeige zusätzlich über Lautsprecher ausgegeben werden. Hat die Eingabe per Spracheingabe stattgefunden, so reaktiviert die Recheneinheit auch den Spracheingabekanal, so dass sich das Betätigen der PTT-Taste durch den Fahrer erübrigt.

Sollen unterbrochene Bedienvorgänge fortgesetzt werden, so ist es in einer weiteren Ausgestaltung der Erfindung vorgesehen, dass die Recheneinheit zur Wiederherstellung des Zustands des Elektroniksystems dieselben Bedieninformationen an das Elektroniksystem ausgibt, die vom Fahrzeugführer in der Vergangenheit verwendet wurden. Dies kann insbesondere bei der Auswahl von Menüs und Menüunterpunkten vorteilhaft sein. Beispielsweise werden in den heutigen Fahrzeugen mehr und mehr Informations- und Unterhaltungssysteme über eine zentrale Ein- und Ausgabeeinheit, eine so genannte Multifunktionsbedieneinheit, bedient. Will man hierbei beispielsweise ein bestimmtes Lied einer in einem CD-Wechsler befindlichen Musik-CD oder auf einer MP3-Speichereinheit anwählen, so sind einige Menüfenster zu durchlaufen bis man in der gewünschten Titelauswahlliste ankommt. Hat der Fahrer nun bereits erste Menüs ausgewählt und muss mittendrin für längere Zeit unterbrechen, so wird es als sehr unkomfortabel empfunden, wenn dieselben Eingaben erneut vorgenommen werden müssen. Ebenso störend ist eine erneute Menüauswahl per Spracheingabe, wie sie beispielsweise beim unterbrochenen Telefonat mit einem Anrufcomputer erforderlich sein kann. Um also den Bediener von wiederholten Eingaben zu entlasten, gibt die Recheneinheit im Fall der reduzierten Beanspruchung des Fahrers die Empfehlung aus, die Auswahl des Musiktitels oder das Telefonat mit dem Anrufcomputer fortzusetzen. Stimmt der Fahrer dem zu, so gibt die Recheneinheit dieselbe Folge von Menüaufrufen an das entsprechende Elektroniksystem, also das Musikwiedergabegerät oder das Funktelefon, aus, die der Fahrer bei seinem unterbrochenen Bedienvorgang verwendet hat.

In einer vorteilhaften Weiterbildung der Erfindung berücksichtigt die Recheneinheit bei der Ermittlung des mindestens einen durchführbaren Bedienvorgangs zusätzliche Informationen über gewünschte Bedienvorgänge, wobei diese zusätzlichen Informationen in der ersten Speichereinheit abgelegt sind oder aus einer zweiten Speichereinheit abrufbar sind. Auf diese Weise werden nicht nur vom Fahrer in der Vergangenheit initiierte und nicht erfolgreich beendete Bedienvorgänge berücksichtigt, sondern auch vom Fahrer beispielsweise für den Verlauf des Tages vorgesehene Dinge. Dies können telefonische Kontakte sein, die aus einem Terminkalender oder einer Telefonliste entnommen werden. Alternativ kann die Recheneinheit aus den Terminen des Tages auch gewünschte Bedienvorgänge ableiten. So kann sie beispielsweise stets dann eine Gesprächsverbindung zu einem aufzusuchenden Geschäftspartner vorschlagen, wenn der vereinbarte Termin aufgrund der momentanen Verkehrssituation höchstwahrscheinlich nicht eingehalten werden kann. Oder es werden Telefonate mit für den heutigen Tag eingetragenen Geburtstagskindern empfohlen. Weitere gewünschte Bedienvorgänge können das Abspielen einer vor Beginn der Fahrt neu eingelegten Musik-CD oder das bei jeder Fahrt einmalig erfolgende Abrufen von Emails sein. Die Recheneinheit greift dafür auf zusätzliche Informationen zurück, die entweder vom Fahrer vorab in die erste Speichereinheit eingegeben werden bzw. dort während des Betriebes abgelegt werden, oder die von der Recheneinheit aus dem Speicher von Zusatzgeräten, wie PDA, SmartPhone oder Navigationssystem abgerufen werden.

In einer weiteren Ausgestaltung der Erfindung kann die Empfehlung des mindestens einen durchführbaren Bedienvorgangs in Abhängigkeit von der Art des Bedienvorgangs oder auch als Ganzes abgeschaltet werden. Damit kann der Fahrzeugführer die Art und Weise der Unterstützung bei der Bedienung des Elektroniksystems individuell an seine Wünsche anpassen. Beispielsweise kann er Geburtstagsanrufe ausklammern oder Anrufe bei bestimmten Geschäftspartnern, mit denen er nicht während der Fahrt sprechen möchte. Er kann das Anbieten von Bedienvorgängen auch gerätespezifisch abschalten, beispielsweise wenn er die Musikanlage ausschließlich nach eigenem Bedarf bedienen möchte, da ein Vergessen einer begonnenen Bedienung hierbei keinerlei Folgen hat, im Gegensatz zu vergessenen Anrufen.

Bei einer vorteilhaften Weiterbildung der Erfindung ermittelt die Recheneinheit aus der Zeitdauer der in der Vergangenheit erfolgten Bedienvorgänge und/oder aus der Anzahl der noch erforderlichen Bedienschritte bis zum Ende des mindestens einen durchführbaren Bedienvorgangs eine zu erwartende Bedienzeitdauer des mindestens einen durchführbaren. So kann die Recheneinheit beispielsweise die Dauer bis zur Erstellung einer Gesprächsverbindung sowie die anschließende Gesprächsdauer abhängig vom Telefonteilnehmer abspeichern. Sind für den Tag drei Telefontermine in der Liste für gewünschte Bedienvorgänge abgespeichert und würde die Verkehrssituation ein Telefongespräch erlauben, so kann die Recheneinheit jeweils eine mittlere Bedienzeitdauer für die drei Gesprächspartner ausgeben, so dass der Fahrer selbst entscheiden kann, welches Telefonat er jetzt tätigen möchte. Musste der Fahrzeugführer zusätzlich einen längeren Bedienvorgang unterbrechen, wie beispielsweise die Eingabe einer Zieladresse im Navigationssystem, kann die Recheneinheit auch die zu erwartende Dauer bis zum Ende dieses Vorgangs, also bis zur Ausgabe der berechneten Route auf einem Bildschirm, abschätzen und gemeinsam mit der Dauer der drei Telefongespräche anzeigen, so dass sich der Fahrer zwischen einem wichtigen Telefonat und einer Fertigstellung der Routenplanung entscheiden kann.

Diese Ausgestaltung kann noch erweitert werden, indem die Recheneinheit die Bedienzeitdauer mit einer Zulässigkeitszeitdauer vergleicht, welche die Dauer bis zu einer voraussichtlichen Veränderung der Belastung des Fahrzeugführers angibt, aufgrund derer die Durchführung des mindestens einen durchführbaren Bedienvorgangs nicht mehr möglich ist. Die Recheneinheit schätzt also ab, wie lange die niedrigere Belastung des Fahrzeugführers anhalten wird und ob die daraus berechnete Zulässigkeitszeitdauer von den Bedienzeitdauern aller empfohlenen durchführbaren Bedienvorgänge unterschritten wird. Damit können die an den Fahrer auszugebenden Empfehlungen besser an seine momentane oder in naher Zukunft liegende Belastungssituation angepasst werden. Bedienvorgänge, deren Bedienzeitdauer gleich groß oder größer als die Zulässigkeitszeitdauer ist, werden entweder nur bedingt, also mit einer Warnung versehen, empfohlen, oder ganz aus der Liste der durchführbaren Bedienvorgänge gestrichen. Hat der Fahrzeugführer sich für einen Bedienvorgang entschieden und begonnen diesen auszuführen, und unterschreitet daraufhin die Zulässigkeitszeitdauer aufgrund sich ändernder Verkehrsverhältnisse die Bedienzeitdauer, so kann der Fahrzeugführer gewarnt werden, damit er die Betätigung entweder an geeigneter Stelle unterbrechen oder beschleunigt zu Ende führen kann.

Unabhängig von empfohlenen durchführbaren Bedienvorgängen kann der Fahrer selbst der Meinung sein, dass die Verkehrssituation einen Bedienvorgang zulässt. Dementsprechend berücksichtigt in einer Weiterbildung der Erfindung die Recheneinheit bei der Ermittlung des mindestens einen durchführbaren Bedienvorgangs, ob der Fahrzeugführer momentan selbst einen Bedienvorgang gestartet hat. Die ausgegebenen Empfehlungen werden damit besser an die Bediensituation angepasst, da sich beispielsweise die Empfehlung weiterer Telefonanrufe so lange erübrigt, bis der Fahrer den aktuellen Anruf beendet hat. Beginnt der Fahrer mit einem zuletzt unterbrochenen Bedienvorgang von vorn, kann er darauf aufmerksam gemacht werden, dass er an der Unterbrechungsstelle fortsetzen kann.

In einer speziellen Ausgestaltung der Erfindung gibt die Recheneinheit in Abhängigkeit von voraussichtlichen Änderungen in der Belastung des Fahrzeugführers Empfehlungen für in der Zukunft durchführbare Bedienvorgänge aus. So ist es möglich, dass zwar die momentane Verkehrslage noch keinerlei Bedienvorgänge zulässt, dass aber die Recheneinheit aufgrund von Informationen aus dem Navigationssystem oder aus dem Verkehrsfunk abschätzt, dass in wenigen Minuten eine Phase geringer Belastung beginnt. Demzufolge kann die Recheneinheit den Fahrzeugführer darüber informieren, welche Bedienvorgänge er in beispielsweise 10 Minuten durchführen könnte. Damit wird ihm mehr Zeit für eine Entscheidung sowie für eine innere Vorbereitung auf den Bedienvorgang gegeben. Insbesondere im Fall von Telefongesprächen kann dies vorteilhaft sein.

In einer bevorzugten Ausführung leitet die Recheneinheit die aktuelle Belastung des Fahrzeugführers aus einem Fahrsituationsmodell ab, welches aus eingelesenen Informationen über den aktuellen Zustand des Fahrzeugs und der Fahrzeugumgebung sowie über das Verhalten des Fahrzeugführers gebildet wird. Ein solches Fahrsituationsmodell bildet damit die gesamte Situation in und um das Fahrzeug ab, wobei die eingehenden Informationen nicht mehr nur wahlweise ausgewertet werden, wie es heute allgemein üblich ist, sondern sie lassen ein umfassendes Abbild der Fahrsituation entstehen. Die Fahrsituation liefert dann eine direkte Aussage über die Höhe der Belastung des Fahrzeugführers.

Der aktuelle Zustand des Fahrzeugs wird dabei hauptsächlich aus Sensorinformationen gewonnen, die den Zustand der Bewegung, also Position, Geschwindigkeit und Beschleunigung, sowie den Zustand der Aggregate des Fahrzeugs, wie Tankinhalt, Batterieladezustand, Reifenluftdruck oder Rückmeldungen vom Motormanagement, wiedergeben. Der aktuelle Zustand der Fahrzeugumgebung wird ebenfalls aus Sensorinformationen gewonnen, wie beispielsweise von einem Regen- und Temperatursensor, einem oder mehreren Videosensoren, einem Verkehrsdichtemesser oder von Abstandssensoren. Zusätzlich können Informationen aus einer Karte genutzt werden, wie sie in Navigationssystemen verwendet wird, um beispielsweise den Straßentyp, die Krümmung, die Steigung, die Anzahl der Fahrspuren und den Abstand zur nächsten Kreuzung auszulesen. Das Verhalten des Fahrzeugführers wird anhand seiner aktuellen Aktivitäten bzw. seines aktuellen Verhaltens, ermittelt, beispielsweise über die Heftigkeit von Lenkbewegungen oder die Anzahl von Spurwechseln im Vergleich zum Straßenverlauf. Weiterhin gehört zum aktuellen Verhalten des Fahrzeugführers, ob er momentan ausschließlich mit der Führung des Fahrzeugs oder noch mit Nebentätigkeiten, wie dem Bedienen von Zusatzgeräten wie Klimaanlage oder Bordcomputer, beschäftigt ist und inwieweit diese Geräte die Atmosphäre im Fahrzeuginnenraum beeinflussen, also welche Temperatur die Klimaanlage einstellen soll oder auf welche Lautstärke die Musikanlage eingestellt ist. Biometrische Messungen, wie Blutdruck des Fahrers, sein Puls, seine Augenbewegungen, sein Gesichtsausdruck oder fahrerzustands-relevante Eigenschaften seiner Stimme, werden zwar momentan in Fahrzeugen weniger vorgenommen, könnten aber zukünftig ebenfalls Rückschlüsse auf das Fahrverhalten ermöglichen.

In einer weiteren Ausgestaltung des Fahrzeugmodells wird das Verhalten des Fahrzeugführers nicht nur von seinem aktuellen Verhalten abgeleitet, sondern es wird auch die Fahrerintention berücksichtigt, d. h. es wird der Hintergrund der angetretenen Fahrt betrachtet. In Verbindung mit einem Navigationssystem kann aus einem Vergleich zwischen der aktuellen Fahrtroute und abgespeicherten, früheren Routen beispielsweise darauf geschlossen werden, ob die Fahrstrecke für den Fahrer eine unbekannte, eine selten befahrene oder gar Routine ist. Die Fahrerintention beinhaltet auch den Zweck der Reise, also ob es sich um eine touristische Rundfahrt handelt, die im Terminkalender als Urlaubstag eingetragen ist und bei der per Routenführung gerade verschiedenste Sehenswürdigkeiten angesteuert werden, oder ob die heutigen Kalendereintragungen einen engen Terminplan anzeigen. Die Berücksichtigung der Fahrerintention ermöglicht eine noch bessere Abschätzung der Fahrerbelastung, da diese beispielsweise auf bekannten Routen oder bei touristischen Fahrten weniger ausfallen wird als auf fremden Strecken und bei Termindruck.

Die Erfindung wird nachfolgend anhand eines Ausführungsbeispiels und der Zeichnung näher erläutert. Es zeigen:
- Fig. 1: ein Modul zur Unterstützung des Fahrzeugführers;
- Fig. 2: vom Fahrzeugführer zu bedienende Menüs;
- Fig. 3: Eingabemenü eines Namens;
- Fig. 4: Auswahlmenü aus geplanten Terminen;
- Fig. 5: Informationsfluss innerhalb der Recheneinheit 1;
- Fig. 6: Mögliche Eingangsgrößen des Fahrsituationsmodells aus Figur 5.

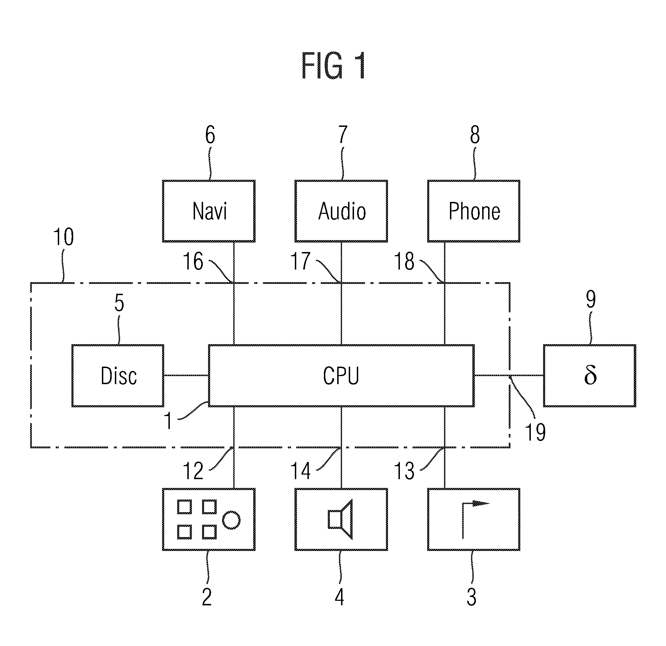

In Figur 1 ist ein Modul 10 zur Unterstützung eines Fahrzeugführers bei der Bedienung von drei, zu Informations- und Unterhaltungszwecken dienenden Elektroniksystemen 6, 7 und 8 dargestellt, mit einer Recheneinheit 1 und einer mit der Recheneinheit 1 verbundenen ersten Speichereinheit 5. Das Modul 10 ist über die Datenschnittstellen 16, 17 und 18 mit den Elektroniksystemen 6, 7 und 8 verbunden, wobei das Elektroniksystem 6 ein Navigationssystem inklusive Routenplanung ist, das Elektroniksystem 7 eine Audioanlage mit der Möglichkeit, Verkehrsfunk zu empfangen und MP3-Dateien abzuspielen, und das Elektroniksystem 8 ein Funktelefon mit Freisprecheinrichtung. Über die Datenschnittstelle 19 empfängt das Modul 10 das Signal δ eines Lenkwinkelsensors 9. Über die Schnittstelle 12 ist das Modul 10 mit einer Eingabeeinheit 2 verbunden, über die Schnittstelle 14 mit einer akustischen Ausgabeeinheit 4 und über die Schnittstelle 13 mit einer grafischen Ausgabeeinheit 3.

Über die Schnittstellen 16, 17 und 18 kann das Modul 10 Bedienbefehle an die jeweiligen Elektroniksysteme 6, 7 und 8 ausgeben sowie verschiedene Eingangsinformationen empfangen. Eingangsinformationen sind beispielsweise Informationen aus dem Navigationssystem 6 über die aktuelle Position und Geschwindigkeit des Fahrzeugs, über geplante Routen sowie Informationen aus einer Straßenkarte oder Informationen aus dem Verkehrsfunkmodul der Audioanlage 7 über Staus und Baustellen oder auch Informationen aus dem Funktelefon 8 über die Qualität der Funknetzverbindung oder über aktuelle Eintragungen in einem im Funktelefon 8 abgelegten Terminkalender.

Aus den Eingangsinformationen der Elektroniksysteme 6, 7 und 8 sowie aus dem Signal δ des Lenkwinkelsensors 9 leitet das Modul 10 die Höhe der aktuellen Belastung des Fahrzeugführers ab. Parallel verfolgt die Recheneinheit 1 die vom Fahrzeugführer über die Eingabeeinheit 2 eingegebenen Bedienbefehle der Elektroniksysteme 6, 7 und 8 und speichert diese Bedienbefehle als Bedieninformationen und zugeordnet zu einzelnen Bedienvorgängen in der ersten Speichereinheit 5 ab. Bedienvorgänge können beispielsweise sein: das Eingeben eines Zielortes für die Routenplanung, die Auswahl eines Musiktitels aus einer Liste an MP3-Dateien, die Eingabe der Telefonnummer eines Gesprächsteilnehmers, unter Umständen in Verbindung mit dessen Namen, die Einstellung der Schriftgröße zur Anzeige der Verkehrsinformationen.

Weiterhin speichert die Recheneinheit 1 Informationen darüber in der Speichereinheit 5 ab, ob die Bedienvorgänge erfolgreich beendet wurden oder nicht.

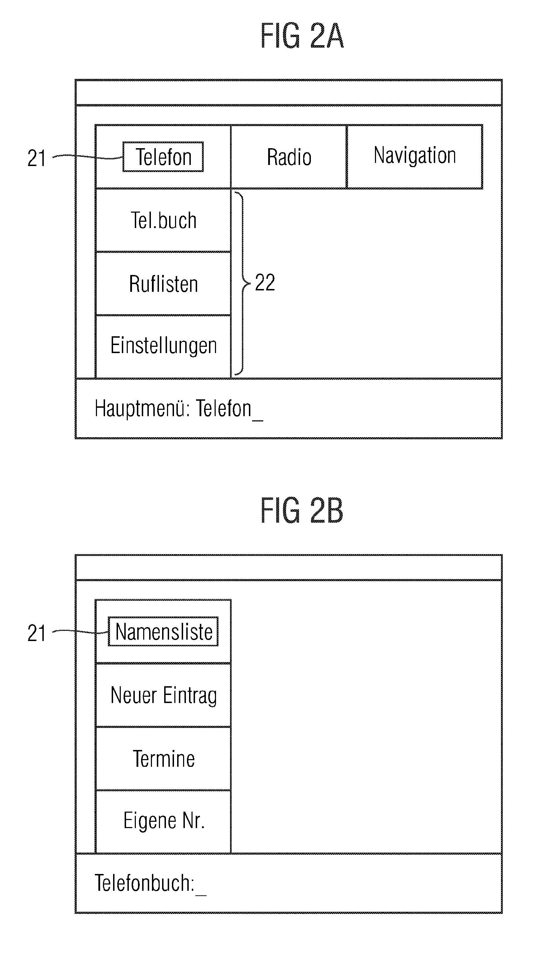

Figur 2 zeigt zwei mögliche Menüdarstellungen auf der Anzeigeeinheit 3, die bei der Bedienung des Funktelefons 8 angezeigt werden. Der Fahrzeugführer hat in Fig. 2a aus dem Hauptmenü den Punkt "Telefon" ausgewählt. Die Auswahl erfolgt dabei über einen Dreh-Drück-Steller 20 an der Eingabeeinheit 2. Wird der Steller 20 gedreht, so wandert das Anwahlfenster 21 über die Menüpunkte "Telefon", "Radio" und "Navigation". Per Drückbetätigung des Stellers 20 wird dann der aktuell angewählte Menüpunkt aktiviert und damit ausgewählt. Aufgrund der Auswahl des Menüpunktes "Telefon" hat sich des weiteren eine Liste mit Unterpunkten geöffnet, in der der Fahrzeugführer nun eine weitere Auswahl vornehmen kann. In Figur 2b ist die Menüdarstellung zu sehen, die sich nach der Auswahl des Unterpunktes "Telefonbuch" öffnet. Nun kann zwischen den Punkten "Namensliste" zur alphabetisch sortierten Anzeige der Eintragungen des Telefonbuchs, "Neuer Eintrag" zur Erweiterung des Telefonbuch um eine weitere Eintragung, "Termine" zur Anzeige von geplanten Telefonanrufen für den aktuellen Tag bzw. in Verbindung mit einem Kalender und "Eigene Nummern" zur Einsicht in eine Liste mit speziellen Telefonkontakten.

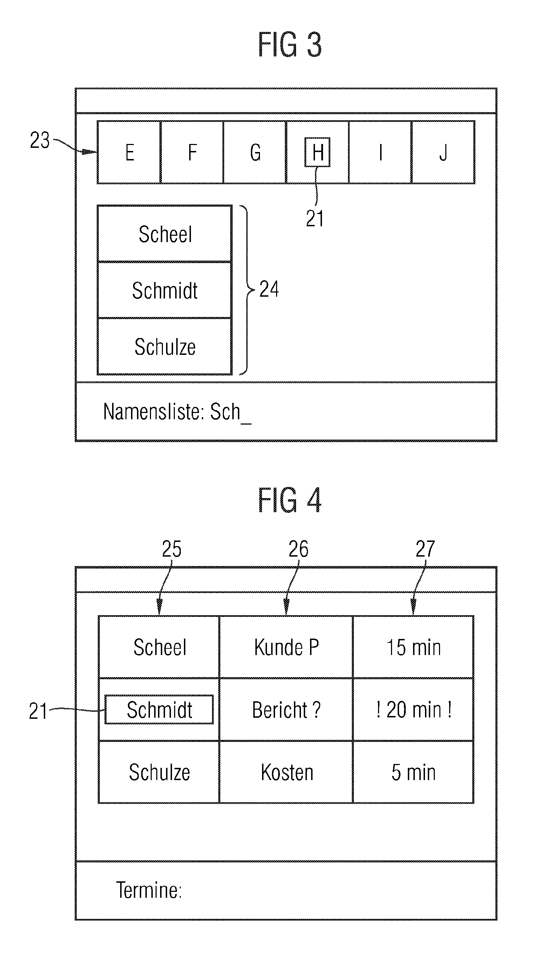

Wählt der Fahrzeugführer den Punkt "Namensliste", so öffnet sich ein Fenster entsprechend Figur 3. Hier kann der Fahrzeugführer nun per Buchstabenauswahl 23 den gewünschten Namen angeben. Dabei genügt die Eingabe der ersten Buchstaben, bis die Liste 24 mit den Namen der in Frage kommenden Gesprächsteilnehmer auf einen Listeneintrag reduziert ist.

Wird nun der Fahrzeugführer aufgrund einer kritischen Verkehrssituation bei seiner Eingabe an der in Figur 3 dargestellten Stelle unterbrochen, so ist er bereits kurz vor dem Ende des Bedienvorgangs "Auswahl eines Gesprächsteilnehmers" angelangt, da die Liste der möglichen Namen bereits auf drei Listenelemente reduziert ist. Dauert die kritische Verkehrssituation länger an, so wird das Eingabemenü automatisch verlassen. Dies registriert die Recheneinheit 1 als abgebrochenen Bedienvorgang, was sie als kennzeichnendes Merkmal gemeinsam mit den bis dahin vom Fahrer eingegebenen Bedieninformationen in der Speichereinheit 5 ablegt.

Eine darauf folgende Entspannung der Verkehrssituation stellt die Recheneinheit 1 beispielsweise anhand des Ausbleibens jeglicher Lenkaktivitäten über das Signal **δ** und anhand der Verringerung der Beschleunigungswerte bzw. der Änderungsraten der Geschwindigkeitssignale fest. Wird wieder mit gleich bleibender Geschwindigkeit gefahren und sind laut Informationen vom Navigationssystem 6 auch für die beispielsweise nächsten 15 Minuten keine Fahrmanöver zu erwarten, die die Aufmerksamkeit des Fahrzeugführers stärker beanspruchen, so ermittelt die Recheneinheit 1 eine momentan niedrige Belastung des Fahrzeugführers, die für eine Zulässigkeitszeitdauer von weiteren 15 Minuten anhalten wird. Aus den in der Speichereinheit 5 abgelegten Bedieninformationen zum abgebrochenen Bedienvorgang "Auswahl eines Gesprächsteilnehmers" bestimmt die Recheneinheit 1, dass der Bedienvorgang nach Eingabe eines weiteren Buchstabens beendet wäre, da sich alle Namen der Liste in ihrem vierten Buchstaben unterscheiden. Dafür wird eine Bedienzeitdauer von beispielsweise 30 Sekunden veranschlagt. Weiterhin ermittelt die Recheneinheit 1 die mittlere Gesprächsdauer aller in der Vergangenheit erfolgreich geführten Telefonate und addiert diesen Wert zu den 30 Sekunden hinzu. Sofern die sich daraus ergebende gesamte Bedienzeitdauer kleiner oder nur unwesentlich größer als die Zulässigkeitszeitdauer von 15 Minuten ist, bietet die Recheneinheit 1 dem Fahrzeugführer an, den Bedienvorgang "Auswahl eines Gesprächsteilnehmers" fortzusetzen. Dafür gibt die Recheneinheit 1 gleichzeitig auf der Anzeigeeinheit 3 sowie über die akustische Ausgabeeinheit 4 die Frage aus "Möchten Sie die begonnene Auswahl eines Gesprächsteilnehmers fortsetzen?". Der Fahrer kann diese Frage nun über die Eingabeeinheit 2 bejahen oder verneinen. Bei einer vorhandenen Spracherkennungseinrichtung wäre auch die Bestätigung per Spracheingabe möglich.

Hat der Fahrer die Frage bejaht, so gibt die Recheneinheit 1 an das Funktelefon 8 die Folge von Menü-Auswahlbefehlen aus, die der Fahrer entsprechend der Figuren 2a, 2b und 3 eingegeben hatte. Damit wird das Funktelefon 8 wieder in den Zustand vor der Unterbrechung zurückversetzt und dem Fahrzeugführer präsentiert sich das Menüeingabe-Fenster wieder so wie er es verlassen hat. Hat der Fahrer dann den vierten Buchstaben eingegeben und damit den gewünschten Gesprächspartner ausgewählt, wird eine Telefonverbindung hergestellt. Zusätzlich veranlasst die Recheneinheit 1, dass auf der Anzeigeeinheit 3 eine maximale Gesprächsdauer empfohlen wird, beispielsweise als "Dauer < 15min". Aufgrund dieser Information weiß der Fahrzeugführer, wann er sich voraussichtlich wieder mit erhöhter Konzentration dem Verkehrsgeschehen zuwenden muss, d. h. bis wann er das Telefonat beendet haben sollte.

Eine weiteres Beispiel einer Unterstützung des Fahrzeugführers durch Modul 10 wird anhand von Figur 4 erläutert. In der Speichereinheit 5 ist beispielsweise momentan kein unterbrochener Bedienvorgang der aktuellen Fahrt abgelegt. Die Recheneinheit 1 erkennt aufgrund der über die Schnittstellen 12 bis 14 und 16 bis 19 eingelesenen Informationen, dass der Fahrzeugführer momentan keinen Bedienvorgang der Elektroniksysteme 6 bis 8 ausführt und dass seine Belastung innerhalb der nächsten 18 Minuten auf einem niedrigen Niveau liegen wird. Aus einem Speicher des Funktelefons 8 liest die Recheneinheit 1 daraufhin aus, ob Telefonanrufe für den heutigen Tag geplant sind. Ist dies der Fall, so gibt die Recheneinheit grafisch und akustisch die Empfehlung bzw. die Frage aus "Möchten Sie geplante Anrufe tätigen?". Sofern der Fahrzeugführer dies bestätigt, wird ihm die Fensterdarstellung aus Figur 4 angezeigt. Dort findet er eine Tabelle der geplanten Anrufe mit den Namen 25 der Teilnehmer, den Hinweisen 26 auf den Grund des Anrufs sowie einer Angabe 27 über die mittlere Dauer der in der Vergangenheit mit dem jeweiligen Gesprächspartner geführten Gespräche. Die Recheneinheit hat vor der Anzeige die einzelnen Gesprächsdauern mit der Zulässigkeitszeitdauer von 18 Minuten verglichen. Da die Gesprächsdauer von 20 Minuten mit dem Teilnehmer Schmidt im Mittel 2 Minuten länger war, wird dies als kritische Zeitdauer durch Ausrufezeichen angezeigt. Dem Fahrzeugführer wird damit empfohlen, möglichst kürzer als diese 20 Minuten zu telefonieren. Aufgrund der angezeigten Informationen aus Figur 4 kann der Fahrer nun entscheiden, welches der Telefonate er führen möchte und dieses per Auswahlfenster 21 auswählen. Zu seiner weiteren Unterstützung kann zusätzlich noch die berechnete Zulässigkeitszeitdauer von 18 Minuten explizit ausgegeben werden.

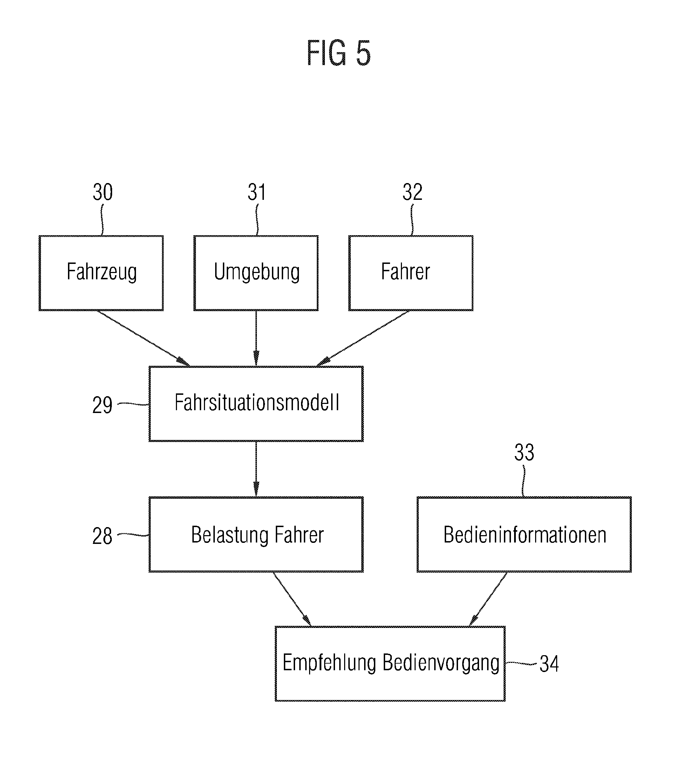

Entsprechend Figur 5 erfolgt die Ermittlung der Belastung 28 des Fahrers in der Recheneinheit 1 aufgrund eines Fahrsituationsmodells 29, in welches der jeweils aktuelle Zustand des Fahrzeugs 30 und der Fahrzeugumgebung 31 sowie das Verhalten des Fahrers 32 eingehen. Aus der Belastung 28 des Fahrers und aus den in der Speichereinheit 5 abgelegten Bedieninformationen 33 bestimmt die Recheneinheit 1 dann den mindestens einen vom Fahrer aktuell durchführbaren Bedienvorgang und gibt eine entsprechende Empfehlung 34 grafisch und/oder akustisch aus. Sollten zwar momentan keine Bedienvorgänge durchführbar sein, sich jedoch die Belastung des Fahrers nach einer bestimmbaren Zeitdauer verringern, so gibt die Recheneinheit 1 eine Empfehlung 34 mit dem Zusatz aus, dass die vorgeschlagene Aktivität erst nach Ablauf dieser Zeitdauer durchführbar ist.

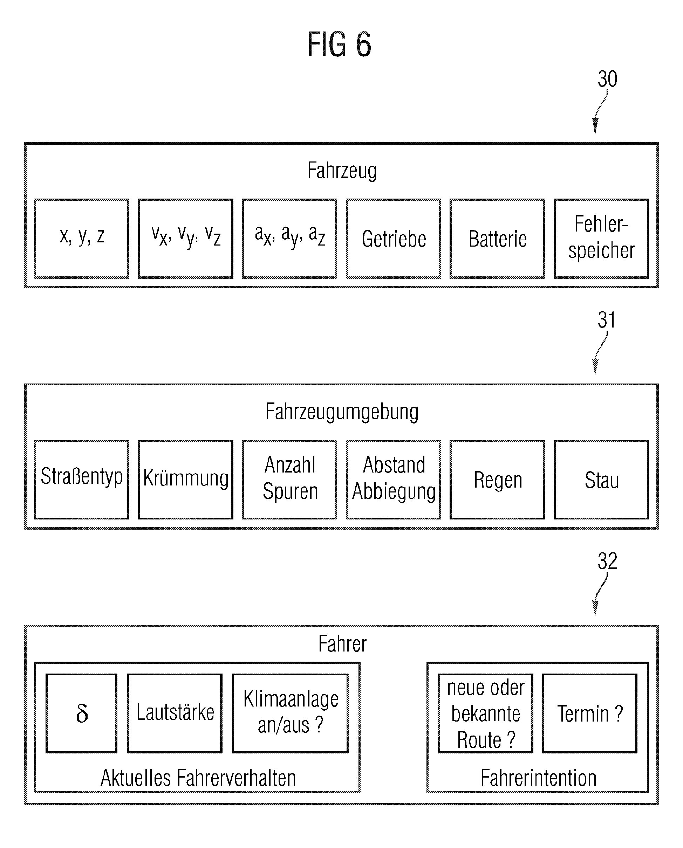

Die in das Fahrsituationsmodell eingehenden physikalischen Größen bzw. Informationen gehen detaillierter aus Figur 6 hervor. Der aktuelle Zustand des Fahrzeugs 30 wird demnach gebildet aus den Informationen des Navigationssystems 6 über die Koordinaten x, y und z des Fahrzeugs sowie über die abgeleiteten Bewegungsgrößen der Geschwindigkeit vₓ, v_{y} und v_{z} und der Beschleunigung aₓ, a_{y} und a_{z}. Weitere Informationen über den Zustand des Fahrzeugs können aus Daten eines nicht dargestellten Bordcomputers gewonnen werden, wobei als Beispiele genannt seien die Art des Getriebes, also ob ein Schaltgetriebe oder eine Schaltautomatik vorliegt, der Ladezustand der Batterie sowie der Inhalt des Fehlerspeichers.

Der weiterhin in Figur 6 dargestellte Zustand der Fahrzeugumgebung 31 bestimmt sich über die Informationen aus der Straßenkarte des Navigationssystems 6 über den aktuellen Straßentyp, die Straßenkrümmung und die Anzahl der Fahrspuren sowie über den Abstand zum nächsten Abbiegepunkt, der aus der Routenführung des Navigationssystems 6 ausgegeben wird. Weitere Informationen werden über einen Regen- oder auch einen Lichtsensor geliefert sowie über den per Audioanlage 7 empfangenen Verkehrsfunk bezüglich Staus, Baustellen oder sonstiger Verkehrsbehinderungen.

Das Verhalten des Fahrers 32 setzt sich zusammen aus dem aktuellen Fahrerverhalten 33, welches über den Lenkwinkel **δ**, den Schaltzustand der Klimaanlage sowie über die gewählten Lautstärkeeinstellung der Audioanlage 7 bestimmt wird, sowie aus der Fahrerintention 34, die anhand der Tatsachen, ob eine neue oder eine bekannte Route befahren wird oder ob einer von mehreren Terminen des Tages erreicht werden sollen, ermittelt wird.

## Patentansprüche

1. Modul (10) zur Unterstützung eines Fahrzeugführers bei der Bedienung eines zu Informations- oder Unterhaltungszwecken dienenden Elektroniksystems (6, 7, 8) in einem Kraftfahrzeug, mit einer Recheneinheit (1), einer mit der Recheneinheit (1) verbundenen Datenschnittstelle (13, 14) zu einer Ausgabeeinheit (3, 4) und einer mit der Recheneinheit (1) verbundenen Datenschnittstelle (12, 16, 17, 18, 19), über die die Recheneinheit (1) mindestens eine Information einliest, aus der die Recheneinheit (1) die aktuelle Belastung (28) des Fahrzeugführers ableitet, **dadurch gekennzeichnet , dass** die Recheneinheit (1) mit einer ersten Speichereinheit (5) verbunden ist, in der Bedieninformationen (33) über in der Vergangenheit durch den Fahrzeugführer erfolgte Bedienvorgänge des Elektroniksystems (6, 7, 8) abgelegt sind, dass die Recheneinheit (1) angepasst an die aktuelle Belastung (28) und an die Bedieninformationen (33) mindestens einen aktuell vom Fahrzeugführer durchführbaren Bedienvorgang des Elektroniksystems (6, 7, 8) ermittelt und zu dem mindestens einen durchführbaren Bedienvorgang eine Empfehlung auf der Ausgabeeinheit (3, 4) ausgibt.

2. Modul (10) nach Anspruch 1, **dadurch gekennzeichnet , dass** der mindestens eine durchführbare Bedienvorgang ein in der Vergangenheit unterbrochener Bedienvorgang ist und dass die Recheneinheit (1) bei Auswahl dieses Bedienvorgangs durch den Fahrzeugführer den Zustand des Elektroniksystems (6, 7, 8) wiederherstellt, der vor der Unterbrechung bestanden hat.

3. Modul (10) nach Anspruch 2, **dadurch gekennzeichnet , dass** die Recheneinheit (1) zur Wiederherstellung des Zustands des Elektroniksystems (6, 7, 8) dieselben Bedieninformationen (33) an das Elektroniksystem (6, 7, 8) ausgibt, die vom Fahrzeugführer in der Vergangenheit verwendet wurden.

4. Modul (10) nach einem der vorhergehenden Ansprüche, **dadurch gekennzeichnet , dass** die Recheneinheit (1) bei der Ermittlung des mindestens einen durchführbaren Bedienvorgangs zusätzliche Informationen (25, 26) über geplante Bedienvorgänge berücksichtigt, wobei diese zusätzlichen Informationen in der ersten Speichereinheit (5) abgelegt oder aus einer zweiten Speichereinheit abrufbar sind.

5. Modul (10) nach einem der vorhergehenden Ansprüche, **dadurch gekennzeichnet , dass** die Empfehlung des mindestens einen durchführbaren Bedienvorgangs in Abhängigkeit von der Art des Bedienvorgangs oder als Ganzes abschaltbar ist.

6. Modul (10) nach einem der vorhergehenden Ansprüche, **dadurch gekennzeichnet , dass** die Recheneinheit (1) aus der Zeitdauer der in der Vergangenheit erfolgten Bedienvorgänge und/oder aus der Anzahl der noch erforderlichen Bedienschritte bis zum Ende des mindestens einen durchführbaren Bedienvorgangs eine zu erwartende Bedienzeitdauer des mindestens einen durchführbaren Bedienvorgangs ermittelt.

7. Modul (10) nach Anspruch 6, **dadurch gekennzeichnet , dass** die Recheneinheit (1) die Bedienzeitdauer mit einer Zulässigkeitszeitdauer vergleicht, welche die Dauer bis zu einer voraussichtlichen Veränderung der Belastung (28) des Fahrzeugführers angibt, aufgrund derer die Durchführung des mindestens einen durchführbaren Bedienvorgangs nicht mehr möglich ist.

8. Modul (10) nach einem der vorhergehenden Ansprüche, **dadurch gekennzeichnet , dass** die Recheneinheit (1) bei der Ermittlung des mindestens einen durchführbaren Bedienvorgangs berücksichtigt, ob der Fahrzeugführer momentan selbst einen Bedienvorgang gestartet hat.

9. Modul (10) nach einem der vorhergehenden Ansprüche, **dadurch gekennzeichnet , dass** die Recheneinheit (1) in Abhängigkeit von voraussichtlichen Änderungen in der Belastung (28) des Fahrzeugführers Empfehlungen für in der Zukunft durchführbare Bedienvorgänge ausgibt.

10. Modul (10) nach einem der vorhergehenden Ansprüche, **dadurch gekennzeichnet , dass** die Recheneinheit (1) die aktuelle Belastung (28) des Fahrzeugführers aus einem Fahrsituationsmodell (29) ableitet, welches aus eingelesenen Informationen über den aktuellen Zustand des Fahrzeugs (30) und der Fahrzeugumgebung (31) sowie über das Verhalten des Fahrzeugführers (32) gebildet wird.

11. Modul (10) nach Anspruch 10, **dadurch gekennzeichnet , dass** beim Verhalten des Fahrzeugführers (32) das aktuelle Verhalten sowie die Fahrerintention berücksichtigt werden.

12. Verfahren zur Unterstützung eines Fahrzeugführers bei der Bedienung eines zu Informations- oder Unterhaltungszwecken dienenden Elektroniksystems (6, 7, 8) in einem Kraftfahrzeug, wobei mindestens eine Information berücksichtigt wird, aus der die aktuelle Belastung (28) des Fahrzeugführers abgeleitet wird, **dadurch gekennzeichnet , dass** in einer ersten Speichereinheit (5) Bedieninformationen (33) über in der Vergangenheit durch den Fahrzeugführer erfolgte Bedienvorgänge des Elektroniksystems (6, 7, 8) abgelegt werden und dass angepasst an die aktuelle Belastung (28) und an die Bedieninformationen (33) mindestens ein aktuell vom Fahrzeugführer durchführbarer Bedienvorgang des Elektroniksystems (6, 7, 8) ermittelt und eine Empfehlung über den mindestens einen durchführbaren Bedienvorgang auf einer Ausgabeeinheit ausgegeben wird.
